# EUROPÄISCHE PATENTSCHRIFT

(11) **EP 3 546 101 B1**
(45) Veröffentlichungstag und Bekanntmachung des Hinweises auf die Patenterteilung: **09.02.2022**
(21) Anmeldenummer: 19171498.9
(22) Anmeldetag: 08.03.2016
(51) Int. Cl.: B23F 21/00, B23F 5/16

(54) **VERFAHREN UND VORRICHTUNG ZUM VERZAHNEN VON WERKRÄDERN DURCH WÄLZSCHÄLEN**
METHOD AND DEVICE FOR GEAR CUTTING WORK WHEELS BY MEANS OF GEAR SKIVING
PROCÉDÉ ET DISPOSITIF SERVANT À TAILLER DES ROUES D'USINAGE PAR DÉCOLLETAGE EN DÉVELOPPANTE

(30) Priorität: 25.03.2015 DE 102015104500
(43) Veröffentlichungstag der Anmeldung: 02.10.2019
(62) Teilanmeldung aus: 16711163.2
(73) Patentinhaber: Profilator GmbH & Co. KG, 42329 Wuppertal (DE)
(72) Erfinder: Buchholz, Klaus, 42369 Wuppertal (DE); Heinemann, Wolfgang, 42855 Remscheid (DE)
(74) Vertreter: Grundmann, Dirk

(56) Entgegenhaltungen:
- EP-A1- 2 570 217
- EP-A1- 2 596 893
- EP-B1- 2 385 885
- WO-A1-2014/034495
- DE-A1- 2 654 177
- DE-A1- 3 915 976
- DE-A1-102013 109 981

## Beschreibung

Die Erfindung betrifft ein Verfahren zum Verzahnen eines Werkrades durch Wälzschälen, gemäß dem Oberbegriff des unabhängigen Anspruchs 1.

Ein derartiges Verfahren ist aus dem Dokument EP 2 570 217 A1 bekannt.

Die Erfindung betrifft darüber hinaus auch eine Vorrichtung zum Verzahnen eines Werkrades durch Wälzschälen gemäss dem Oberbegriff des unabhängigen Anspruchs 7, die ebenfalls aus dem Dokument EP 2 570 217 A1 bekannt ist.

Die EP 2 596 893 A1 beschreibt ein Wälzschälverfahren, bei dem mittels eines Schneidzähne aufweisenden Schneidrades zunächst in mehreren Schruppschnitten eine Grobverzahnung erzeugt wird. Die Schneidzähne haben einen trapezförmigen Querschnitt, so dass in zwei aufeinanderfolgenden Schlichtschnitten jeweils nur die linken Zahnflanken und jeweils nur die rechten Zahnflanken mit einem einlaufenden Schnitt bearbeitet werden können. Hierzu wird die Drehrichtung von Werkzeugspindel und Werkstückspindel gedreht und der Achskreuzwinkel geändert.

Aus der DE 10 2008 037 514 A1 ist eine Vorrichtung bekannt, die Spindelantriebe und Positionierantriebe besitzt, die von einer elektronischen Steuereinrichtung programmgesteuert angetrieben werden. Es sind Elektromotoren vorgesehen, die die Positionierantriebe und die Spindelantriebe ausbilden. Beim Verzahnen von Werkstücken durch Wälzschälen wird ein Werkzeug in Form eines Schneidrades mit radial abragenden Zähnen kontinuierlich drehangetrieben. Das Werkstück, bei dem es sich um einen unverzahnten oder vorverzahnten Rohling handeln kann, wird von einer Werkstückspindel bei einem vorgegebenen Drehzahlverhältnis derart angetrieben, dass die Schneidzähne des Werkzeuges in einem wälzenden Eingriff in das zu verzahnende Werkstück treten. Die Schneidzähne greifen dabei zufolge des Achskreuzwinkels derart schälend in das Werkstück ein, dass in der Drehebene eine Spanabtragsstelle über die linke Zahnflanke zunächst einwälzend, d.h. vom Zahnkopf zum Zahnfuß die Zahnflanke bearbeitet und dann die gegenüberliegende rechte Zahnflanke auswälzend, d.h. vom Zahnfuß zum Zahnkopf hin bearbeitet. Der Wanderung der Spanabtragsstelle in der Drehebene des Schneidrades ist eine Wanderbewegung der Spanabtragsstelle aufgrund des Achskreuzwinkels in Axialrichtung des Werkrades bzw. in Flankenerstreckungsrichtung der Zahnflanken der Zähne des Werkrades überlagert. Der Vorschub erfolgt dabei im Wesentlichen in derselben Richtung, bei geradverzahnten Werkrädern in Achsrichtung und bei schräg verzahnten Werkrädern in einem Winkel dazu, nämlich in Zahnflankenerstreckungsrichtung. Bei dem bekannten Wälzschälverfahren wird die Verzahnung in mehreren aufeinander folgenden Wälzschälschritten gefertigt, wobei der Vorschub im Wesentlichen gleich bleibt, jedoch zwischen den einzelnen Bearbeitungsschritten im Wege einer Zustellung der Achsabstand derart verändert wird, dass schrittweise die Zahnzwischenräume zwischen den zu fertigenden Zähnen vertieft werden. Bei den Schruppschnitten erfolgt die Vertiefung der Zahnlücken mit hohem Spanabtrag bis kurz vor Erreichen des Fertigmaßes. Mit einem geringeren Spanabtrag und einem geringeren Vorschub erfolgt dann anschließend die Feinbearbeitung in einem Schlichtschnitt. Bei diesem Schlichtschnitt können beide Zahnflanken gleichzeitig bei einem Zahneingriff bearbeitet werden, wobei die Spanabtragsstelle zunächst über die linke Zahnflanke in einwälzender Richtung und anschließend über die rechte Zahnflanke in auswälzender Richtung wandert.

Die DE 10 2013 109 981 A1 beschreibt ein ähnliches Verfahren, bei dem zwei aufeinander folgende Schlichtschnitte durchgeführt werden, wobei in einem ersten Schlichtschnitt mit einem einlaufenden Schnitt die linke Zahnflanke und in einem Schlichtschnitt nach Änderung der Phasenlage zwischen Werkstückspindeldrehung und Werkzeugspindeldrehung die rechte Zahnflanke in einem auslaufenden Schnitt bearbeitet wird.

Der Erfindung liegt die Aufgabe zugrunde, ein die Zahnflankenqualität verbesserndes Verfahren und eine hierzu verwendbare Vorrichtung anzugeben.

Gelöst wird die Aufgabe durch die in den Ansprüchen 1 bzw. 7 angegebene Erfindung.

Die Unteransprüche stellen nicht nur vorteilhafte Weiterbildungen der nebengeordneten Ansprüche dar. Sie bilden auch eigenständige Lösungen der Aufgabe.

Zunächst und im Wesentlichen wird vorgeschlagen, dass die Feinbearbeitung in zwei aufeinander folgenden Schlichtschnitten durchgeführt wird, wobei in einem ersten Schlichtschnitt jeweils nur die linke Zahnflanke und in einem zweiten Schlichtschnitt jeweils nur die rechte Zahnflanke bearbeitet wird. Im ersten Schlichtschnitt bleibt die rechte Zahnflanke unbearbeitet, und im zweiten Schlichtschnitt bleibt die linke Zahnflanke unbearbeitet. Die beiden Schlichtschnitte werden erfindungsgemäß derart durchgeführt, dass beide Schlichtschnitte mit einem einwälzenden Schnitt durchgeführt werden. Der Anlagepunkt der jeweiligen Schneidkante des Schneidzahnes des Schneidrades an der jeweiligen Zahnflanke des Zahnes des Werkrades wandert sowohl beim ersten, als auch beim zweiten Schlichtschnitt in einlaufender Richtung, d.h. vom Zahnkopf des Zahnes der Verzahnung hin zum Zahnfuß des Zahnes der Verzahnung. Die Bearbeitung der beiden voneinander verschiedenen Zahnflanken erfolgt bevorzugt mit zwei voneinander verschiedenen Schneidrädern, die eine zueinander spiegelsymmetrische Form besitzen. Jedes Schneidrad kann von einer ihm zugeordneten Werkzeugspindel drehangetrieben werden. Die beiden Schneidräder können aber auch als Kombiwerkzeug ausgebildet sein und von einer einzigen Werkzeugspindel drehangetrieben werden. Die beiden Schneidräder liegen dann axial hintereinander. Zwischen dem ersten und dem zweiten Schlichtschnitt wird bevorzugt die Drehrichtung der Werkstückspindel umgekehrt. Es ist ferner von Vorteil, wenn zwischen dem ersten und dem zweiten Schlichtschnitt die Bearbeitungsposition des Schneidrades geändert wird. Alternativ dazu kann auch der Achskreuzwinkel zwischen Werkstückspindelachse und Werkzeugspindelachse geändert werden. Bevorzugt erfolgt der Vorschub sowohl beim ersten Schlichtschnitt, als auch beim zweiten Schlichtschnitt in Richtung der Schälbewegung der Schneidkanten, also der Wanderungsbewegung der Spanabtragsstelle, an der die linke oder rechte Schneidkante die linke oder rechte Zahnflanke tangiert, in Vorschubrichtung. Die Bearbeitung der linken Zahnflanken beim ersten Schlichtschnitt erfolgt mit Schneidzähnen eines ersten Schneidrades. Die Bearbeitung der rechten Zahnflanken beim zweiten Schlichtschnitt erfolgt mit Schneidzähnen eines zweiten Schneidrades. Die Bearbeitungen erfolgen zeitlich hintereinander folgend.

Bei der Bearbeitung geradverzahnter Werkräder kommen bevorzugt rechtsschräge und linksschräge Werkzeuge ggf. mit verschiedenem Durchmesser zum Einsatz. Es handelt sich gewissermaßen um spiegelsymmetrische Schneidräder, wobei sich vorzugsweise nur die Schrägungsrichtungen der Werkzeuge durch ihr Vorzeichen unterscheiden. Der Achskreuzwinkel bleibt gleich. Die Werkzeuge sind dann auf zwei separaten Werkzeugspindeln platziert. Alternativ dazu kann sich aber auch die Bearbeitungsstellung, an der das Schneidrad am Werkrad angreift, um - bezogen auf die Werkstückspindelachse - 180 Grad unterscheiden. Bei der Verzahnung von schrägverzahnten Werkrädern kann eine Ungleichheit der Absolutwerte der Achskreuzwinkel und der Werkzeugschrägungswinkel bestehen. Das erste Schneidrad und das zweite Schneidrad besitzen allerdings im Allgemeinen entgegen gerichtete schräg verlaufende Schneidzähne. In einer besonders bevorzugten Ausgestaltung ist vorgesehen, dass die Schruppschnitte mit jedem der beiden Schneidräder durchgeführt werden können. Bei einer aufeinander folgenden Bearbeitung mehrerer Werkräder kommen deshalb sowohl das erste, als auch zweite Schneidrad bei der Schruppbearbeitung zum Einsatz. Bevorzugt erfolgt dies abwechselnd, so dass die Schruppschnitte bei der Bearbeitung eines ersten Werkrades mit dem ersten Schneidrad durchgeführt werden, mit dem auch der erste Schlichtschnitt durchgeführt wird. Danach wird mit dem zweiten Schneidrad der zweite Schlichtschnitt durchgeführt, wobei hierzu vorher die Drehrichtung des Werkrades umgedreht wird, so dass sich das Werkrad bei den beiden Schlichtbearbeitungsschritten in entgegengesetzten Drehrichtungen dreht. Bei der darauf folgenden Bearbeitung eines zweiten Werkrades wird unter Beibehaltung der im letzten Schlichtschnitt verwendeten Drehrichtung das zweite Werkrad mit dem zweiten Schneidrad schruppbearbeitet. Der erste Schlichtschnitt wird mit dem zweiten Schneidrad durchgeführt. Der zweite Schlichtschnitt wird mit dem ersten Schneidrad durchgeführt und in einer entgegengesetzten Drehrichtung der Werkstückspindel. Die Bearbeitung des Werkstücks mit dem ersten Schneidrad erfolgt bevorzugt immer in einer ersten Drehrichtung der Werkstückspindel. Die Bearbeitung des Werkstücks mit dem zweiten Schneidrad erfolgt bevorzugt immer in einer zweiten Drehrichtung der Werkstückspindel, die der ersten Drehrichtung entgegengesetzt ist.

Die erfindungsgemäße Vorrichtung besitzt eine Steuereinrichtung, die derart eingerichtet, insbesondere programmiert ist, dass die Vorrichtung das zuvor beschriebene Verfahren ausübt. Hierzu besitzt die Vorrichtung eine Werkstückspindel mit einem Futter zur Aufnahme des zu verzahnenden Werkrades. Sie besitzt zumindest eine Werkzeugspindel zur Aufnahme eines ersten Schneidrades oder zur Aufnahme eines Kombiwerkzeuges. Alternativ dazu kann die Vorrichtung aber auch eine zweite Werkzeugspindelachse aufweisen zur Aufnahme des zweiten Schneidrades. Es sind darüber hinaus Stellantriebe und Vorschubantriebe vorgesehen, mit denen die mindestens eine Werkzeugspindelachse gegenüber der Werkstückspindelachse sowohl relativ gegenüber der Werkstückspindelachse in Achsrichtung als auch relativ dazu in Achsabstandsrichtung verlagerbar ist. Der Vorschub und die Zustellung kann aber auch durch eine Verlagerung der Werkstückspindel in entsprechender Weise erfolgen. Die Drehantriebe der Werkstückspindel und der mindestens einen Werkzeugspindel sind miteinander synchronisiert, so dass sich die Werkstückspindelachse in einem festen Drehzahlverhältnis zur Werkzeugspindelachse dreht.

Ein Ausführungsbeispiel der Erfindung wird nachfolgend anhand beigefügter Zeichnungen erläutert. Es zeigen:
- Fig. 1: schematisch in der Draufsicht auf ein Werkrad 1 ein in spanabhebendem Schneideingriff zum Werkrad 1 stehendes Schneidrad 2,
- Fig. 2: eine Darstellung gemäß Fig. 1 in einer Blickrichtung gemäß Pfeil II,
- Fig. 3: den Ausschnitt III in Fig. 1 zur Verdeutlichung der Wanderbewegung der Spanabtragsstelle 14 entlang der linken Zahnflanke 7,
- Fig. 4: eine Folgedarstellung zu Fig. 3, wobei nach einer Drehung der Werk-stückspindel 3 und der Werkzeugspindel 4 in Drehrichtung D die Spanabtragsstelle 14 weiter in einlaufender Richtung, d.h. vom Zahn-kopf 9 in Richtung auf den Zahnfuß 10 gewandert ist,
- Fig. 5: eine Folgedarstellung zu Fig. 4, nachdem der Schneidzahn 11 durch den Zahnfuß 10 hindurchgetaucht ist und die Spanabtragsstelle 14 in auslaufender Richtung, d.h. vom Zahnfuß 10 in Richtung auf den Zahnkopf 5 entlang der rechten Zahnflanke 8 wandert,
- Fig. 6: eine Folgedarstellung zu Fig. 14, wobei die Spanabtragsstelle 14 weiter in auslaufender Richtung S auf den Zahnkopf 9 hin zugewandert ist,
- Fig. 7: schematisch eine Phase des ersten Schlichtschnittes, bei dem nach einer spanabhebenden Bearbeitung entsprechend der Figuren 3 bis 4 der Schneidzahn 11 aus der Zahnlücke 6 austaucht, ohne dass die rechte Zahnflanke 8 spanbearbeitet wird,
- Fig. 8: eine Darstellung gemäß Fig. 1, nachdem auf einen ersten Schlicht-schnitt folgend ein zweites Schneidrad 2' in eine Spaneingriffsstellung in die Verzahnung des Werkrades 1 gebracht ist,
- Fig. 9: eine Darstellung gemäß Blickrichtung IX in Fig. 8,
- Fig. 10: eine Darstellung gemäß den Figuren 3 bis 7, jedoch bei einem zweiten Schlichtschnitt, bei dem die rechte Spankante 13' des Schneidzahnes 11' des zweiten Schneidrades 2' an einer Spanabtragsstelle 14 die rechte Spanflanke 8 an einer Spanabtragsstelle 14 bearbeitet und sich das Werkrad 1 in einer Drehrichtung D' dreht, die der Drehrichtung D in den Figuren 3 bis 7 entgegengerichtet ist, so dass die Spanabtrags-stelle 14 in einlaufender Richtung, d.h. vom Zahnkopf 9 zum Zahnfuß hin entlang der rechten Zahnflanke 8 wandert,
- Fig. 11: eine Folgedarstellung zu Fig. 10, wobei die Spanabtragsstelle 14 in Richtung auf den Zahnfuß 10 weitergewandert ist,
- Fig. 12: eine Folgedarstellung, wobei während des zweiten Schlichtschnittes der Schneidzahn 11' aus er Zahnlücke 6 austaucht, ohne dass die linke Schneidkante 12' die linke Zahnflanke 7 beaufschlagt,
- Fig. 13: schematisch ein erstes Ausführungsbeispiel einer Vorrichtung, bei der zwei Schneidräder 2, 2' jeweils von einer Werkzeugspindel 16, 16' getragen werden und eine Werkstückspindel 15 ein zu verzahnendes Werkrad 1 trägt,
- Fig. 14: ein zweites Ausführungsbeispiel der Erfindung, wobei zwei Schneid-räder 2, 2' als Kombiwerkzeug an einer Werkzeugspindel 16 sitzen und das erste Schneidrad 2 in Schneideingriff steht, und
- Fig. 15: eine Darstellung gemäß Fig. 14, wobei das zweite Schneidrad 2' im Schneideingriff steht.

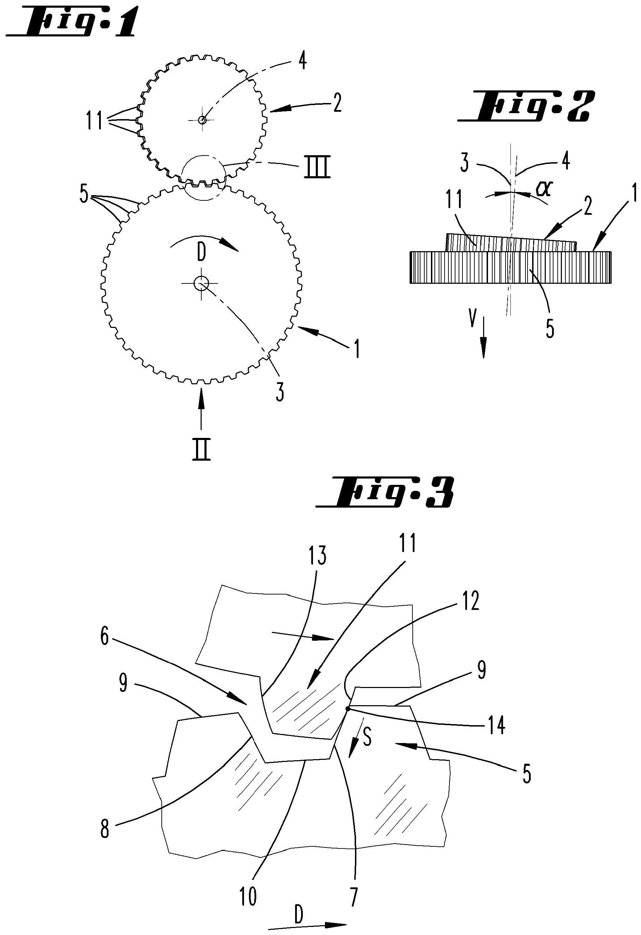

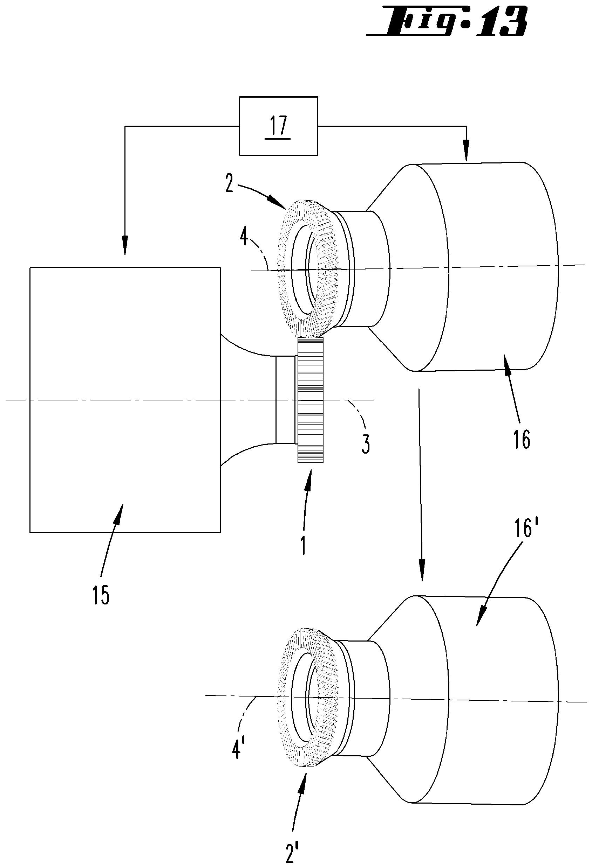

Die Figur 13 zeigt ein erstes Ausführungsbeispiel einer erfindungsgemäßen Vorrichtung. Bei der erfindungsgemäßen Vorrichtung handelt es sich um eine Werkzeugmaschine mit einem Maschinenbett, an der eine Werkstückspindel 15 befestigt ist. Mittels Linearantrieben kann die Werkstückspindel 15 in drei Raumrichtungen verlagert werden. Es sind zwei Werkzeugspindeln 16, 16' vorgesehen, die zumindest um eine Drehachse drehbar sind, so dass ein Achskreuzwinkel α zwischen der Werkstückspindelachse 3 und der Werkzeugspindelachse 4 einstellbar ist. Durch eine Verlagerung der Werkstückspindel 15 kann das Werkrad 1 in eine Bearbeitungsstellung gebracht werden, in der die Schneidzähne 11 des ersten Schneidrades 2 in einen spanabhebenden Eingriff in das Werkrad 1 eintreten können. Es ergibt sich die in den Figuren 1 und 2 dargestellte Betriebsstellung.

In mehreren aufeinanderfolgenden Schruppschnitten wird zwischen zwei Zähnen 5 des Werkrades 11 eine Zahnlücke 6 schrittweise vertieft. Hierzu wird in einer ersten Achsabstandsstellung der Werkstückspindelachse 3 und der Werkzeugspindelachse 4 die Werkstückspindel 15 in Achsrichtung verlagert, so dass sich eine relative Vorschubbewegung V einstellt, bei der sich die Schneidzähne 11 in Schälrichtung durch das Werkrad 1 bewegen. Mit verändertem Achsabstand werden weitere Schruppschnitte durchgeführt, bei denen die Zahnlücke 6 schrittweise vertieft wird.

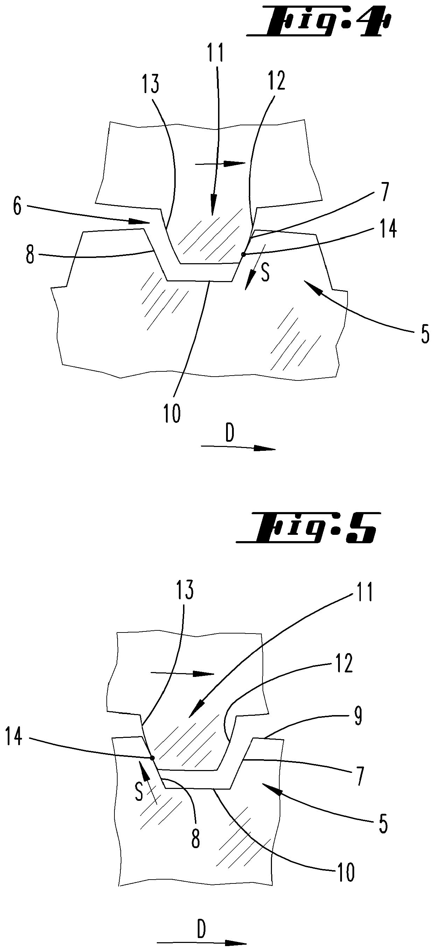

Bei der spanenden Bearbeitung greift zunächst eine linke Schneidkante 12 des Schneidzahnes 11 beim Eintauchen des Schneidzahnes 11 in die Zahnlücke 6 an einer linken Zahnflanke 7 des Zahnes 5 an. Die Schneidkante 12 steht in einer tangierenden Stellung zur Zahnflanke 7. In einer Abroll- bzw. Abwälzbewegung wandert der Berührungspunkt, der eine Spanabtragsstelle 14 definiert, vom Zahnkopf 9 zum Zahnfuß 10 in einem einlaufenden Schnitt entlang des Pfeiles S der Figuren 3 und 4.

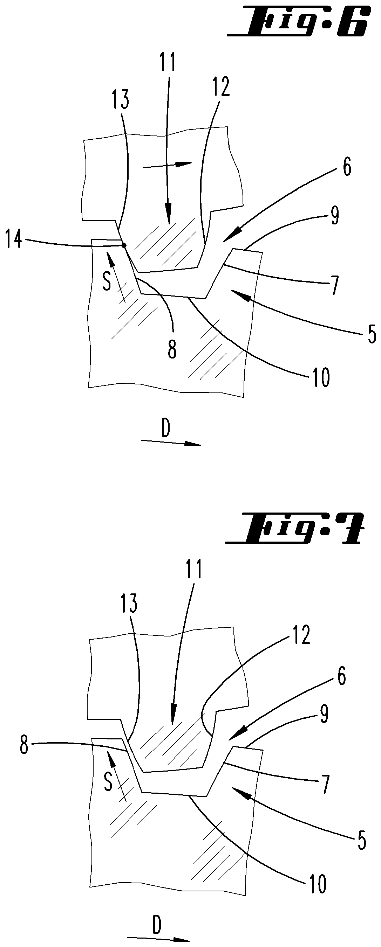

Darauf folgend taucht der Zahnkopf des Schneidzahnes 11 durch den Zahnfußbereich der Zahnlücke 6, so dass die rechte Schneidkante 13 in Angriff an die rechte Zahnflanke 8 des Zahnes 5 tritt. Der Berührungspunkt der rechten Schneidkante 13 an der rechten Zahnflanke 8 definiert eine Spanabtragsstelle 14, die sich im Zuge der Drehung D des Werkrades in Richtung vom Zahnfuß 10 hin zum Zahnkopf 9 entsprechend der Darstellungen der Figuren 5 und 6 weiter verlagert.

Ein erster Schlichtschnitt wird entsprechend der Darstellungen der Figuren 3 und 4 durchgeführt, in dem die linke Schneidkante 12 an der linken Zahnflanke 7 abrollt und die Spanabtragsstelle 14 in einlaufender Richtung vom Zahnkopf 9 zum Zahnfuß 10 wandert. Die Austauchbewegung des Schneidzahnes 11 aus der Zahnlücke 6 erfolgt aber hier ohne eine Berührung der rechten Schneidkante 13 an der rechten Zahnflanke 8, wie es die Fig. 7 zeigt. Bei dieser Bearbeitung werden also bei allen Zähnen zunächst nur die linken Zahnflanken 7 feinbearbeitet. Die rechten Zahnflanken 8 bleiben grobbearbeitet.

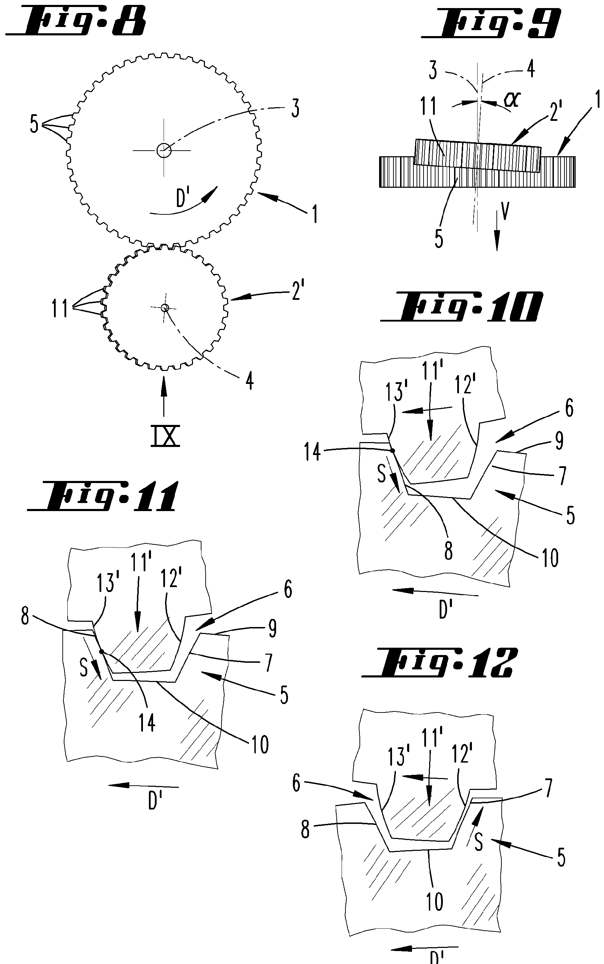

Nach dem ersten Schlichtschnitt wird ein zweites Schneidrad 2' verwendet. Dieses kann von der in Fig. 13 dargestellten zweiten Werkzeugspindel 16 getragen werden. Das Werkrad 1 kann durch eine Verlagerung der Werkstückspindel 15 in eine Bearbeitungsstellung zum zweiten Schneidrad 2' gebracht werden. Es ergibt sich dann die in den Figuren 8 und 9 dargestellte Betriebsstellung. In dieser Betriebsstellung wird ein zweiter Schlichtschnitt durchgeführt, der in entgegengesetzter Drehrichtung D' der Werkstückspindel 3 erfolgt. Dabei bearbeitet die rechte Schneidkante 13' des Schneidzahnes 11' des zweiten Schneidrades 2' die rechte Zahnflanke 8. Die rechte Schneidkante 13' rollt/wälzt dabei derartig über die rechte Zahnflanke 8, dass sich der Berührungspunkt der rechten Schneidkante 13' an der rechten Zahnflanke 8, also die Spanabtragsstelle 14 entlang des Pfeiles S in den Figuren 10 und 11 in einlaufender Richtung, also vom Zahnkopf 9 hin zum Zahnfuß 10 verlagert.

Nach Erreichen der tiefsten Eingriffsstellung löst sich die rechte Schneidkante 13' von der rechten Zahnflanke 8. Der Schneidzahn 11 taucht aus der Zahnlücke 6 heraus, ohne dass die linke Schneidkante 12' die linke Zahnflanke 7 berührt. Bei diesem Bearbeitungsschritt werden über den gesamten Umfang des Werkrades 1 immer nur die rechten Zahnflanken 8 feinbearbeitet. Die bereits feinbearbeiteten linken Zahnflanken 7 werden nicht bearbeitet.

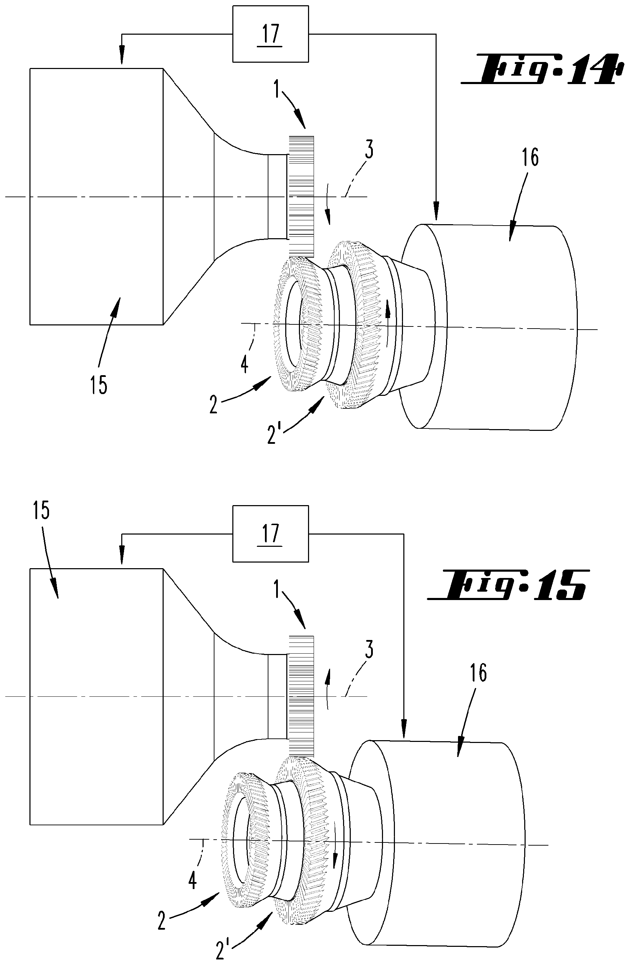

Das in den Figuren 14 und 15 dargestellte zweite Ausführungsbeispiel zeigt ein Kombiwerkzeug, welches ein erstes Schneidrad 2 und ein zweites Schneidrad 2' ausbildet, wobei sich die beiden Schneidräder 2, 2' in axialer Richtung bezogen auf die Werkzeugspindelachse 4 angeordnet sind. Zur Vermeidung von Kollisionen mit der Aufspanneinrichtung des Werkrades 1 kann der Durchmesser des zweiten Schneidrades 2', welches axial hinter dem ersten Schneidrad 2 angeordnet ist, größer sein als der Durchmesser des ersten Schneidrades 2.

In einem besonders bevorzugten Verfahren, welches mit einer der beiden in den Figuren 13 bis 15 beschriebenen Vorrichtungen durchgeführt werden kann, werden mehrere gleichgestaltete Werkräder nachfolgend aufeinander verzahnt. Dabei werden die Schruppschnitte abwechselnd entweder mit dem ersten Schneidrad 2 oder mit dem zweiten Schneidrad 2' durchgeführt, wobei die Werkstückspindelachse 3 und die Werkzeugspindelachse 4, 4' jeweils in einer dem jeweiligen Schneidrad 2, 2' zugeordneten Drehrichtung D, D' gedreht werden.

Der erste Schlichtschnitt wird mit demselben Schneidrad 2, 2' durchgeführt, mit dem auch die Schruppschnitte durchgeführt worden sind. Der zweite Schlichtschnitt wird mit dem jeweiligen anderen Schneidrad 2, 2' durchgeführt, wobei die Werkstückspindel 15 und die Werkzeugspindel 16, 16' dann mit geändertem Drehsinn drehangetrieben werden. Diese Bearbeitungsweise führt zu einer gleichmäßigen Abnutzung der beiden Schneidräder 2, 2'.

**Bezugszeichenliste:**

| | | | |
|---|---|---|---|
| 1 | Werkrad | D | Drehrichtung |
| 2 | Schneidrad | D' | Drehrichtung |
| 2' | Schneidrad | | |
| 3 | Werkstückspindelachse | S | Pfeil (Richtung) |
| 4 | Werkzeugspindelachse | | |
| 4' | Werkzeugspindelachse | | |
| 5 | Zahn | V | Vorschub (-bewegung) |
| 6 | Zahnlücke | | |
| 7 | Zahnflanke, linke | | |
| 8 | Zahnflanke, rechte | | |
| 9 | Zahnkopf | | |
| 10 | Zahnfuß | | |
| 11 | Schneidzahn | | |
| 11' | Schneidzahn | | |
| 12 | linke Schneidkante | | |
| 13 | rechte Schneidkante | | |
| 14 | Spanabtragsstelle | | |
| 15 | Werkstückspindel | | |
| 16 | Werkzeugspindel | | |
| 16' | Werkzeugspindel | | |
| 17 | Steuereinrichtung | | |
| | | | |
| | | | |
| α | Achskreuzwinkel | | |

## Patentansprüche

1. Verfahren zum Verzahnen eines Werkrades (1) durch Wälzschälen, wobei ein an einer ersten Werkzeugspindel (16) sitzendes, Schneidzähne (11) aufweisendes Schneidrad (2), um eine Werkzeugspindelachse (4) drehangetrieben wird, und die Schneidzähne (11) in das von einer Werkstückspindel (15) getragene, um eine in einem Achskreuzwinkel (a) zur Werkzeugspindelachse (4) stehende Werkstückachse (3) drehangetriebenes Werkrad (1) bei einem Vorschub (V) in Erstreckungsrichtung der Zähne (5) der Verzahnung spanabhebend eingreifen, wobei in mehreren aufeinanderfolgenden Schruppschnitten die Zahnlücken (6) zwischen linken und rechten Zahnflanken (7, 8) der Zähne (5) der Verzahnung gefertigt werden, und darauf folgend in einem ersten Schlichtschnitt nur die linken Zahnflanken (7) und in einem zweiten Schlichtschnitt nur die rechten Zahnflanken (8) bearbeitet werden, **dadurch gekennzeichnet, dass** bei den mehreren aufeinanderfolgenden Schruppschnitten die Zahnlücken (6) zwischen linken und rechten Zahnflanken (7, 8) der Zähne (5) der Verzahnung durch eine Änderung des Achsabstandes von Werkzeugspindeldrehachse (4) und Werkstückspindeldrehachse (3) vertieft werden und dass die ersten und zweiten Schlichtschnitte von zwei verschiedenen Schneidrädern (2, 2') durchgeführt werden, wobei mit linken Schneidkanten (12) der ersten Schneidzähne (11) des ersten Schneidrades (2) jeweils nur die linken Zahnflanken (7) und mit den rechten Schneidkanten (13) der zweiten Schneidzähne (11') des zweiten Schneidrades (2') jeweils nur die rechten Zahnflanken (8) bearbeitet werden und die Wälzschälbewegung bei beiden Schlichtschnitten mit einer vom Zahnkopf (9) zum Zahnfuß (10) wandernden Spanabtragsstelle (14) durchgeführt werden.

2. Verfahren nach Anspruch 1, **dadurch gekennzeichnet, dass** das zweite Schneidrad (2') von einer zweiten Werkzeugspindel (16') drehangetrieben wird.

3. Verfahren nach Anspruch 1, **dadurch gekennzeichnet, dass** das erste und das zweite Schneidrad (2, 2') axial hintereinander auf derselben Werkzeugspindel (16) sitzen.

4. Verfahren nach einem der vorhergehenden Ansprüche, **dadurch gekennzeichnet, dass** zwischen dem ersten und dem zweiten Schlichtschnitt die Drehrichtung der Werkstückspindel (3) geändert und entweder die Bearbeitungsposition des Schneidrades (2, 2') oder der Achskreuzwinkel (a) geändert wird.

5. Verfahren nach einem der vorhergehenden Ansprüche, **dadurch gekennzeichnet, dass** beim aufeinanderfolgenden Bearbeiten mehrerer Werkräder für die Schruppschnitte sowohl das erste, als auch das zweite Schneidrad verwendet werden.

6. Verfahren nach Anspruch 5, **dadurch gekennzeichnet, dass** für die Schruppschnitte abwechselnd das erste und das zweite Schneidrad verwendet wird und der zweite Schlichtschnitt mit dem jeweils anderen Schneidrad (2, 2') durchgeführt wird.

7. Vorrichtung zum Verzahnen eines Werkrades (1) durch Wälzschälen mit einer Werkzeugspindel (16), an der ein Schneidzähne (11) aufweisendes Schneidrad (2) sitzt, das um eine Werkzeugspindelachse (4) drehantreibbar ist, und mit einer Werkstückspindel (15), die um eine in einem Achskreuzwinkel zur Werkzeugspindelachse (4) stehenden Werkstückachse (3) drehantreibbar ist und das Werkrad (1) trägt, und mit einer Steuereinrichtung (17), mit der die Werkstückspindel (15) und die Werkzeugspindel (16) und eine Vorschubeinrichtung derart ansteuerbar sind, dass die Schneidzähne (11) in das in Erstreckungsrichtung der Zähne (5) vorgeschobene Werkrad (1) spanabhebend eingreifen, wobei in mehreren aufeinanderfolgenden Schruppschnitten die Zahnlücken (6) zwischen linken und rechten Zahnflanken (7, 8) der Zähne (5) gefertigt werden, und darauf folgend in einem ersten Schlichtschnitt nur die linken Zahnflanken (7) und in einem zweiten Schlichtschnitt nur die rechten Zahnflanken (8) bearbeitet werden, **dadurch gekennzeichnet, dass** die Steuereinrichtung (17) auch so eingerichtet ist, dass bei den mehreren aufeinanderfolgenden Schruppschnitten die Zahnlücken (6) zwischen linken und rechten Zahnflanken (7, 8) der Zähne (5) der Verzahnung durch eine Änderung des Achsabstandes von Werkzeugspindeldrehachse (4) und Werkstückspindeldrehachse (3) vertieft werden und dass die ersten und zweiten Schlichtschnitte von zwei verschiedenen Schneidrädern (2, 2') durchgeführt werden, wobei mit linken Schneidkanten (12) der ersten Schneidzähne (11) des ersten Schneidrades (2) jeweils nur die linken Zahnflanken (7) und mit den rechten Schneidkanten (13) der zweiten Schneidzähne (11') des zweiten Schneidrades (2') jeweils nur die rechten Zahnflanken (8) bearbeitet werden und die Wälzschälbewegung bei den beiden Schlichtschnitten mit einer vom Zahnkopf (9) zum Zahnfuß (10) wandernden Spanabtragsstelle (14) durchgeführt werden.

8. Vorrichtung nach Anspruch 7, **dadurch gekennzeichnet, dass** beim aufeinanderfolgenden Bearbeiten mehrerer Werkräder für die Schruppschnitte sowohl das erste als auch das zweite Schneidrad verwendet werden.

9. Vorrichtung nach Anspruch 8, **dadurch gekennzeichnet, dass** für die Schruppschnitte abwechselnd das erste und das zweite Schneidrad verwendet wird und der zweite Schlichtschnitt mit dem jeweils anderen Schneidrad (2, 2') durchgeführt wird.

10. Vorrichtung nach einem der Ansprüche 7 bis 9, **dadurch gekennzeichnet, dass** das zweite Schneidrad (2') spiegelsymmetrisch zum ersten Schneidrad (2) ausgebildet ist.

## Claims

1. Method for producing a toothing of a workpiece gear (1) by means of skiving, wherein a cutting wheel (2) which is seated on a first tool spindle (16) and has cutting teeth (11) is rotationally driven about a tool spindle axis (4), and the cutting teeth (11) engage into the workpiece gear (1), which is carried by a workpiece spindle (15) and is rotationally driven about a workpiece axis (3) which is aligned at an axial intersection angle (α) to the tool spindle axis (4), in a machining manner during an advance (V) in the extension direction of the teeth (5) of the toothing, wherein the tooth gaps (6) between left and right tooth flanks (7, 8) of the teeth (5) of the toothing are made in multiple successive rough cuts, and subsequently only the left tooth flanks (7) are machined in a first finishing cut and only the right tooth flanks (8) are machined in a second finishing cut, **characterised in that** the tooth gaps (6) between the left and right tooth flanks (7, 8) of the teeth (5) of the toothing are deepened during the multiple successive rough cuts by changing the axial clearance between the tool spindle rotational axis (4) and the workpiece spindle rotational axis (3) and **in that** the first and second finishing cuts are carried out by two different cutting wheels (2, 2'), wherein only the left tooth flanks (7) are machined with left-hand cutting edges (12) of the first cutting teeth (11) of the first cutting wheel (2) and only the right tooth flanks (8) are machined with the right-hand cutting edges (13) of the second cutting teeth (11') of the second cutting wheel (2'), and the skiving motion for both finishing cuts can be carried out with a machining point (14) which migrates from the tooth tip (9) to the tooth root (10).

2. Method according to claim 1, **characterised in that** the second cutting wheel (2') is rotationally driven by a second tool spindle (16').

3. Method according to claim 1, **characterised in that** the first and the second cutting wheel (2, 2') sit axially one behind the other on the same tool spindle (16).

4. Method according to any of the preceding claims, **characterised in that** the direction of rotation of the workpiece spindle (3) is changed between the first and the second finishing cut and either the machining position of the cutting wheel (2, 2') or the axial intersection angle (α) is changed.

5. Method according to any of the preceding claims, **characterised in that** both the first and the second cutting wheel are used for the rough cuts in the successive machining of multiple workpiece gears.

6. Method according to claim 5, **characterised in that** the first and the second cutting wheel are used alternately for the rough cuts and the second finishing cut is carried out with the other cutting wheel (2, 2') in question.

7. Device for producing a toothing of a workpiece gear (1) by means of skiving, comprising a tool spindle (16) on which a cutting wheel (2) is seated which has cutting teeth (11) and can be rotationally driven about a tool spindle axis (4), and comprising a workpiece spindle (15) which can be rotationally driven about a workpiece axis (3) aligned at an axial intersection angle to the tool spindle axis (4) and which carries the workpiece gear (1), and comprising a controller (17) by means of which the workpiece spindle (15) and the tool spindle (16) and an advancing means can be actuated such that the cutting teeth (11) engage in a machining manner into the workpiece gear (1) which is advanced in the extension direction of the teeth (5), wherein the tooth gaps (6) between left and right tooth flanks (7, 8) of the teeth (5) are made in multiple successive rough cuts, and subsequently only the left tooth flanks (7) are machined in a first finishing cut and only the right tooth flanks (8) are machined in a second finishing cut, **characterised in that** the controller (17) is also designed such that the tooth gaps (6) between the left and right tooth flanks (7, 8) of the teeth (5) of the toothing are deepened during the multiple successive rough cuts by changing the axial clearance between the tool spindle rotational axis (4) and the workpiece spindle rotational axis (3) and **in that** the first and second finishing cuts are carried out by two different cutting wheels (2, 2'), wherein only the left tooth flanks (7) are machined with left-hand cutting edges (12) of the first cutting teeth (11) of the first cutting wheel (2) and only the right tooth flanks (8) are machined with the right-hand cutting edges (13) of the second cutting teeth (11') of the second cutting wheel (2'), and the skiving motion for both finishing cuts can be carried out with a machining point (14) which migrates from the tooth tip (9) to the tooth root (10).

8. Device according to claim 7, **characterised in that** both the first and the second cutting wheel are used for the rough cuts in the successive machining of multiple workpiece gears.

9. Device according to claim 8, **characterised in that** the first and the second cutting wheel are used alternately for the rough cuts and the second finishing cut is carried out with the other cutting wheel (2, 2') in question.

10. Device according to any of claims 7 to 9, **characterised in that** the second cutting wheel (2') is designed to be mirror-symmetrical to the first cutting wheel (2).

## Revendications

1. Procédé pour pourvoir une roue à usiner (1) avec une denture par taillage par génération, dans lequel une roue de coupe (2) montée sur une première broche d'outil (16) et présentant des dents de coupe (11) est entraînée en rotation autour d'un axe de broche d'outil (4), et les dents de coupe (11) engagent en enlèvement de copaux la roue à usiner (1) supportée par une broche de pièce à usiner (15) et entraînée en rotation autour d'un axe de pièce à usiner (3) formant un angle de croisement d'axes (a) avec l'axe de broche d'outil (4) lors d'une avance (V) dans la direction d'extension des dents (5) de la denture, dans lequel les entredents (6) entre les flancs gauches et droits (7, 8) des dents (5) de la denture sont réalisés dans plusieurs passes d'ébauche successives, et ensuite seuls les flancs gauches (7) des dents sont usinés dans une première passe de finition et seuls les flancs droits (8) des dents sont usinés dans une deuxième passe de finition, **caractérisé en ce que** lors de la pluralité de passes d'ébauche successives, les entredents (6) entre les flancs gauches et droits (7, 8) des dents (5) de la denture sont approfondis par une modification de l'entraxe de l'axe de rotation de la broche d'outil (4) et de l'axe de rotation de la broche de pièce à usiner (3) et **en ce que** les première et deuxième passes de finition sont effectuées par deux roues de coupe différentes (2, 2'), dans lequel les arêtes de coupe gauches (12) des premières dents de coupe (11) de la première roue de coupe (2) n'usinent à chaque fois que les flancs de dents gauches (7) et les arêtes de coupe droites (13) des deuxièmes dents de coupe (11') de la deuxième roue de coupe (2') n'usinent à chaque fois que les flancs de dents droits (8) et le mouvement de taillage par génération est effectué lors des deux passes de finition avec un endroit d'enlèvement de copeaux (14) se déplaçant du haut de la dent (9) vers le bas de la dent (10).

2. Procédé selon la revendication 1, **caractérisé en ce que** la deuxième roue de coupe (2) est entraînée en rotation par une deuxième broche d'outil (16').

3. Procédé selon la revendication 1, **caractérisé en ce que** la première et la deuxième roue de coupe (2, 2') sont montées axialement l'une derrière l'autre sur la même broche d'outil (16).

4. Procédé selon l'une des revendications précédentes, **caractérisé en ce que**, entre la première et la deuxième passe de finition, le sens de rotation de la broche de pièce à usiner (3) est changé et soit la position d'usinage de la roue de coupe (2, 2'), soit l'angle de croisement d'axes (a) est changé.

5. Procédé selon l'une des revendications précédentes, **caractérisé en ce qu'**aussi bien la première que la deuxième roue de coupe sont utilisées pour les passes d'ébauche lors de l'usinage successif de plusieurs roues à usiner.

6. Procédé selon la revendication 5, **caractérisé en ce que** la première et la deuxième roue de coupe sont utilisées alternativement pour les passes d'ébauche et la deuxième passe de finition est réalisée à chaque fois avec l'autre roue de coupe (2, 2).

7. Dispositif pour pourvoir une roue à usiner (1) avec une denture par taillage par génération avec une broche d'outil (16) sur laquelle se trouve une roue de coupe (2) présentant des dents de coupe (11), qui peut être entraînée en rotation autour d'un axe de broche d'outil (4), et avec une broche de pièce à usiner (15) qui peut être entraînée en rotation autour d'un axe de pièce à usiner (3) formant un angle de croisement d'axes avec l'axe de broche d'outil (4) et qui porte la roue à usiner (1), et avec un dispositif de commande (17) avec lequel la broche de pièce à usiner (15), la broche d'outil (16) et un dispositif d'avance peuvent être commandés de telle manière que les dents de coupe (11) engagent en enlèvement de copeaux la roue à usiner (1) avancée dans la direction d'extension des dents (5), les entredents (6) entre les flancs gauches et droits (7, 8) des dents (5) étant réalisés en plusieurs passes d'ébauche successives et ensuite seuls les flancs gauche (7) des dents sont usinés dans une première passe de finition et seuls les flancs droit (8) des dents sont usinés dans une deuxième passe de finition, **caractérisé en ce que** le dispositif de commande (17) est également configuré de telle manière que, lors de la pluralité de passes d'ébauche successives, les entredents (6) entre les flancs gauches et droits (7, 8) des dents (5) de la denture sont approfondis par une modification de l'entraxe de l'axe de rotation de broche d'outil (4) et de l'axe de rotation de broche de pièce à usiner (3) et que les première et deuxième passes de finition sont effectuées par deux roues de coupe différentes (2, 2'), seuls les flancs de dents gauches (7) étant à chaque fois usinés avec des arêtes de coupe gauches (12) des premières dents de coupe (11) de la première roue de coupe (2) et seuls les flancs de dents droits (8) étant à chaque fois usinés avec les arêtes de coupe droites (13) des deuxièmes dents de coupe (11') de la deuxième roue de coupe (2') et le mouvement de taillage par génération étant effectué lors des deux passes de finition avec un endroit d'enlèvement de copeaux (14) se déplaçant du haut de la dent (9) vers le bas de la dent (10).

8. Dispositif selon la revendication 7, **caractérisé en ce qu'**aussi bien la première que la deuxième roue de coupe sont utilisées pour les passes d'ébauche lors de l'usinage successif de plusieurs roues à usiner.

9. Dispositif selon la revendication 8, **caractérisé en ce que** la première et la deuxième roue de coupe sont utilisées alternativement pour les passes d'ébauche et la deuxième passe de finition est réalisée à chaque fois avec l'autre roue de coupe (2, 2').

10. Dispositif selon l'une des revendications 7 à 9, **caractérisé en ce que** la deuxième roue de coupe (2') est réalisée avec une symétrie spéculaire par rapport à la première roue de coupe (2).
